# EUROPEAN PATENT SPECIFICATION

(11) **EP 3 820 083 B1**
(45) Date of publication and mention of the grant of the patent: **01.03.2023**
(21) Application number: 19841350.2
(22) Date of filing: 03.07.2019
(51) Int. Cl.: H04L 41/0806, G06F 9/455

(54) **PHYSICAL FUNCTION MULTIPLEXING METHOD AND APPARATUS AND COMPUTER STORAGE MEDIUM**
VERFAHREN UND VORRICHTUNG ZUM MULTIPLEXEN VON PHYSIKALISCHEN FUNKTIONEN UND COMPUTERSPEICHERMEDIUM
PROCÉDÉ ET APPAREIL DE MULTIPLEXAGE DE FONCTION PHYSIQUE ET SUPPORT D'INFORMATIONS INFORMATIQUE

(30) Priority: 23.07.2018 CN 201810810147
(43) Date of publication of application: 12.05.2021
(73) Proprietor: ZTE Corporation, Shenzhen, Guangdong 518057 (CN)
(72) Inventor: LIU, Yong, Nanjing, Jiangsu 210012 (CN)
(74) Representative: Würmser, Julian
(86) International application number: PCT/CN2019/094467
(87) International publication number: WO 2020/019950

(56) References cited:
- CN-A- 105 790 991
- CN-A- 106 250 211
- CN-A- 107 643 938
- XIN XU ET AL: "SRVM", ACM SIGPLAN NOTICES, ASSOCIATION FOR COMPUTING MACHINERY, US, vol. 51, no. 7, 25 March 2016 (2016-03-25) , pages 65-77, XP058298710, ISSN: 0362-1340, DOI: 10.1145/3007611.2892256
- KOMOLAFE OLUFEMI: "IP multicast in virtualized data centers: Challenges and opportunities", 2017 IFIP/IEEE SYMPOSIUM ON INTEGRATED NETWORK AND SERVICE MANAGEMENT (IM), IFIP, 8 May 2017 (2017-05-08), pages 407-413, XP033127588, DOI: 10.23919/INM.2017.7987305 [retrieved on 2017-07-20]
- N/a: "Specification of the Infrastructure Virtualisation, Management and Orchestration - Interim.", T-NOVA, 30 September 2014 (2014-09-30), pages 1-193, XP055385973, Retrieved from the Internet: URL:http://www.t-nova.eu/wp-content/upload s/2014/12/TNOVA_D2.31_Spec_of_IVM_and_Orch estrator_I.pdf [retrieved on 2017-06-28]

## Description

### TECHNICAL FIELD

The present disclosure relates to the field of communications, and more particularly, to a physical function multiplexing method and apparatus, and a computer storage medium.

### BACKGROUND

At present, more and more telecommunication operators use virtualization as an infrastructure of traditional networking. To improve virtualized communication performances of a physical network card, the Peripheral Component Interconnect Special Interest Group (PCI-SIG) proposed a Single Root I/O Virtualization (SR-IOV) technology, which has become a de facto industry standard of current network card hardware virtualization, since a wire speed may be reached without occupying physical server resources. Besides, due to cost reduction of computing resources of a server, another network card virtualization technology, i.e., a technology (hereinafter referred to as OVDK) that integrates an OpenVswitch standard (OVS) and a Data Plane Development Kit (DPDK), i.e., integrating a virtual switch technology of the Open Virtual switch standard OVS and a strategy of exchanging computing resources for the DPDK to use for network performances is developed, so as to improve high throughput and low delay of the virtualized network cards.

To achieve the above two objectives, it is required for a host to directly allocate a virtual function (VF) to virtual network functions (VNFs) by using the SRIOV-Direct technology, or to use a DPDK driver to occupy a physical function (PF) and a part of the computing resources for network communications of VNFs.

With regard to the SRIOV-direct technology, due to a limitation of the number of VF of a SRIOV network card, it is unable to allocate a large number of virtual network Interface cards (vNICs) for VNFs. However, the OVDK technology is not limited by the number of VF like the SRIOV-Direct technology, and can virtualize hundreds of vNICs in theory, but network transmission performances of the OVDK technology are much inferior to that of the SRIOV-Direct due to the premise that the OVDK technology occupies the computing resources. In telecommunication application scenarios, the OVDK technology is merely applied to signaling flow, control flow or some media flow transmission with low requirements on the network service quality. Therefore, in the industry at present, these two virtualization technologies are used in a mixed manner; that is, in a same network element, the SRIOV-Direct is used for media flows with high throughput and low delay, while other transmissions with low throughput and delay requirements are networked by the OVDK with a low comprehensive cost.

Therefore, the above two technologies may be used for different PFs to achieve the coexistence of network elements of different application types on the same server. However, the number of high-performance PF resources of the server may be limited generally. For example, there may be only two network cards of 40 GE, and redundant backup for each other needs to be considered, so these two technologies cannot coexist, for meeting flexible application of the network elements.

In view of the above, it is desirable to have a method for multiplexing these two technologies, so as to deploy network elements using the SRIOV-direct and the OVDK technologies on a server with only one PF. At present, there is no example of deploying the network elements using the SRIOV-direct and the OVDK technologies on the server with only one PF.

### SUMMARY

To solve the existing technical problems, independent claims provide a physical function multiplexing method and apparatus, and a computer storage medium.

To achieve the above objectives, technical solutions of the embodiments of the present disclosure are implemented as follows.

A first aspect of the present disclosure provide a physical function multiplexing method applied at a network device, wherein the network device includes at least one virtual machine VM; a first VM in the at least one VM has at least one physical function PF; the first VM is any VM in the at least one VM; a first PF in the at least one PF is configured with at least two virtual functions VFs; and the first PF is any PF in the at least one PF, wherein the method includes: configuring at least one first VF in the at least two VFs to support an OVDK function, the first VF being any VF in the at least two VFs; and configuring other VF excluding the at least one first VF in the at least two VFs to support a single root I/O virtualization SR-IOV function.

A second aspect of the present disclosure further provide a physical function multiplexing apparatus applied to a network device, wherein the network device includes at least one virtual machine VM; a first VM in the at least one VM has at least one physical function PF; the first VM is any VM in the at least one VM; a first PF in the at least one PF is configured with at least two virtual functions VFs; and the first PF is any PF in the at least one PF, wherein the apparatus includes: a first configuration module configured to configure at least one first VF in the at least two VFs to support an OVDK function, the first VF being any VF in the at least two VFs; and a second configuration module configured to configure other VF excluding the at least one first VF in the at least two VFs to support a single root I/O virtualization SR-IOV function.

A third aspect of the present disclosure further provide a computer readable storage medium storing a computer program thereon, wherein the computer program is executable by a processor to implement the physical function multiplexing method mentioned above.

### BRIEF DESCRIPTION OF THE DRAWINGS

FIG. 1 is a first flow chart of a physical function multiplexing method according to an embodiment of the present disclosure;
FIG. 2 is a second flow chart of the physical function multiplexing method according to the embodiment of the present disclosure;
FIG. 3 is a first composition diagram of a physical function multiplexing apparatus according to an embodiment of the present disclosure;
FIG. 4 is a second composition diagram of the physical function multiplexing apparatus according to the embodiment of the present disclosure;
FIG. 5 is a third composition diagram of the physical function multiplexing apparatus according to the embodiment of the present disclosure;
FIG. 6 is a fourth composition diagram of the physical function multiplexing apparatus according to the embodiment of the present disclosure;
FIG. 7 is a first control diagram of a physical function multiplexing method based on FIG. 6 according to an embodiment of the present disclosure;
FIG. 8 is a second control diagram of the physical function multiplexing method based on FIG. 6 according to the embodiment of the present disclosure; and
FIG. 9 is a fifth composition diagram of the physical function multiplexing apparatus according to the embodiment of the present disclosure.

### DETAILED DESCRIPTION

The present disclosure will be further described hereinafter in detail with reference to the drawings and the specific embodiments.

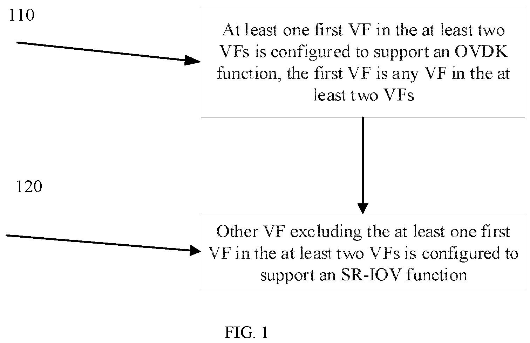

Embodiments of the present disclosure provide a physical function multiplexing method applied at a network device, wherein the network device includes at least one VM; a first VM in the at least one VM has at least one PF; the first VM is any VM in the at least one VM; a first PF in the at least one PF is configured with at least two VFs; and the first PF is any PF in the at least one PF. As shown in FIG. 1, the method mainly includes step 110 and step 120.

In step 110: at least one first VF in the at least two VFs is configured to support an OVDK function, the first VF is any VF in the at least two VFs.

Here, the at least one first VF is configured to load a DPDK driver, so that the at least one first VF supports the OVDK function.

Specifically, the first VM may run on a physical server, the physical server may be loaded with the first PF, and the first PF may support the SR-IOV technology. A user configures a first VM of the physical server through network management, and an operating system allocates a plurality of VFs to the first PF during initialization. The number of the VF may be obtained according to actual application requirements and properties of the first PF.

Further, when the first VM is created, a plurality of VFs are configured at the same time. The physical server includes a computing node, and service processes supporting OVDK and SR-IOV data transmission are simultaneously loaded on the computing node. In addition, another physical server may be taken as a computing node, and service processes supporting OVDK and SR-IOV data transmission are loaded on the computing node at the same time. The computing node controls the OVDK service process to arbitrarily select one or more VFs from the plurality of VFs as at least one first VF, and loads the DPDK driver on the at least one first VF, so that the at least one first VF can transmit data based on the DPDK technology, and then links a virtual function module to a virtual switch, so that the virtual function module can provide a virtual switch type interface based on OVDK for a network element to use for data transmission.

In practical application, the computing node may control the OVDK service process to select at least one VF to load the DPDK driver. For example, two VFs are selected to load the DPDK driver, and then the two VFs are linked to the virtual switch, so that the two VFs can transmit data based on the DPDK technology.

For example, a physical server S1 includes one PF1, the PF1 may support the SR-IOV technology. The user creates a virtual machine VM1 through the network management of the control node. When initializing the virtual machine VM1, the operating system allocates 63 VFs (VF0 to VF62) to the PF1. An OVDK service process and an SR-IOV service process are loaded on the physical server S1, and the computing node controls the OVDK service process to arbitrarily select any VF0 for association, loads the DPDK driver on VF0, and then links VF0 to the virtual switch, so that VF0 can provide a virtual switch type interface based on OVDK.

In step 120: other VF excluding the at least one first VF in the at least two VFs is configured to support an SR-IOV function.

Specifically, except for the at least one first VF that already supports the OVDK function, other VF is configured to support the SR-IOV function, and a virtual network card service based on the SR-IOV technology is provided to the network element for data transmission.

For example, the computing node controls the SR-IOV service process to be associated with the virtual functions VF1 to VF62, so that the virtual function VF1 to VF62 can provide the virtual network card services based on the SR-IOV technology for data transmission.

In this way, one PF is configured with a plurality of VFs, at least one VF is configured to support the OVDK function, and all the other VFs are configured to support the SR-IOV function, so that the PF can support the OVDK technology and the SR-IOV technology at the same time, thus reducing a hardware requirement of the network device, improving a flexibility of environment for using the network device, and reducing a cost of the network device.

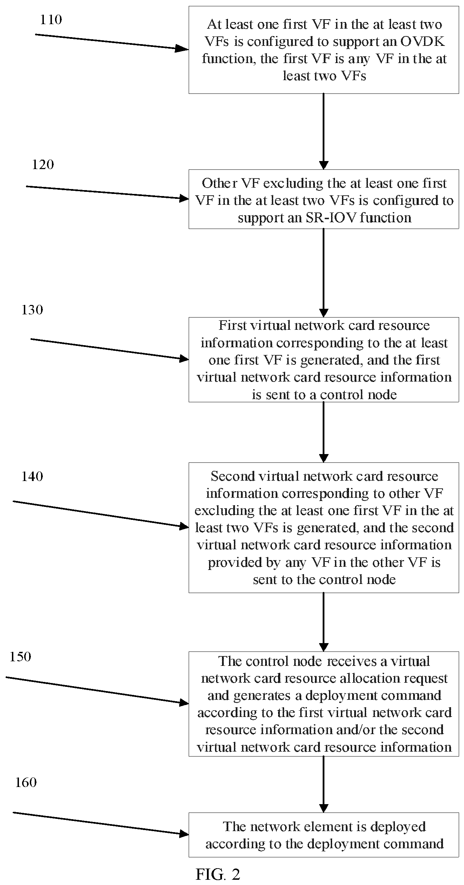

The physical function multiplexing method provided by the embodiments of the present disclosure, as shown in FIG. 2, further includes the following step 130 to step 160.

In step 130: first virtual network card resource information corresponding to the at least one first VF is generated, and the first virtual network card resource information is sent to a control node.

Here, the control node is associated with the first VM; and the user creates the first VM through a network management function of the control node. The control node may be set on a physical server together with the computing node, or may be arranged differently from the computing node, that is, the control node is located on another physical server.

Specifically, the first virtual network card resource includes a virtualized network resource that may be provided by the at least one first VF.

In step 140: second virtual network card resource information corresponding to other VF excluding the at least one first VF in the at least two VFs is generated, and the second virtual network card resource information provided by any VF in the other VF is sent to the control node.

Specifically, the second virtual network card resource includes a virtualized network resource that may be provided by any VF excluding the at least one first VF.

Specifically, the computing node collects virtual network card resource information that may be provided on the first VM, wherein the virtual network card resource information includes PCI address information of a virtual network card inside the first VM. The OVDK service process reports the virtual network card resource information of the first VF associated therewith to the control node, and the virtual network card resource may provide a virtual network card service based on the OVDK technology. The SR-IOV service process reports the virtual network card resource information of all the other virtual functions VFs associated therewith to the control node, and then saves the virtual network card resource information in a resource pool. The control node collects and stores all the reported virtual network card resource information.

For example, after the steps in the above embodiment, the computing node controls the OVDK service process to report the virtual network card resource information of VF0 to the control node (e.g., denoted as Controller1), the computing node controls the SR-IOV service process to report the virtual network card resource information of all other VFs (VF1 to VF62) to Controller1, and controls Controller1 to collect and store all the received virtual network card resource information.

In step 150: the control node receives a virtual network card resource allocation request and generates a deployment command according to the first virtual network card resource information and/or the second virtual network card resource information.

Specifically, when a network element needs to use a network card for data transmission, the network element sends the virtual network card resource allocation request to the control node. When the control node receives the virtual network card resource allocation request from the network element, the control node queries locally stored virtual network card resource information which includes the first virtual network card resource information and the second virtual network card resource information, and generates a deployment command according to the virtual network card resource information.

For example, a media gateway device M1 needs to transmit data, which includes transmission of a large amount of media data and interaction of flow control information. The SR-IOV technology can provide services for the transmission of the large amount of media data, and the OVDK technology can provide services for the interaction of the flow control information. The Controller1 receives virtual network card resource allocation request information R1 sent from the media gateway device M1, and generates a deployment command O1 according to the virtual network card resource information stored locally.

In step 160: the network element is deployed according to the deployment command.

Here, the at least one first VF and any VF in the other VF are allocated to the network element for use.

Specifically, after the computing node receives the deployment command, the OVDK service process and the SR-IOV service process running on the computing node respectively allocate the at least one first VF supporting the OVDK service and any VF in the other VF supporting the SR-IOV service to the network element for use, according to the deployment command.

For example, after the physical server S1 receives the deployment command O1, the OVDK service process allocates VF0 to the media gateway device M1 to provide an interactive service of the flow control information to the media gateway device M1, and the SR-IOV service process allocates VF1 to the media gateway device M1 to provide a media data transmission service to the media gateway device M1 to complete the gateway deployment.

In this way, one PF is configured with a plurality of VFs, at least one VF is configured to support the OVDK function, and all the other VFs are configured to support the SR-IOV function, so that the physical function PF can support the OVDK technology and the SR-IOV technology at the same time, thus enabling an operator to improve an ability of deploying the network element required by hybrid network performances under the condition of using the least PF, reducing a hardware requirement for deploying the network element with both high forwarding performance and multiple virtual network cards, improving a flexibility of using environment of the operator, and reducing a cost of the network device.

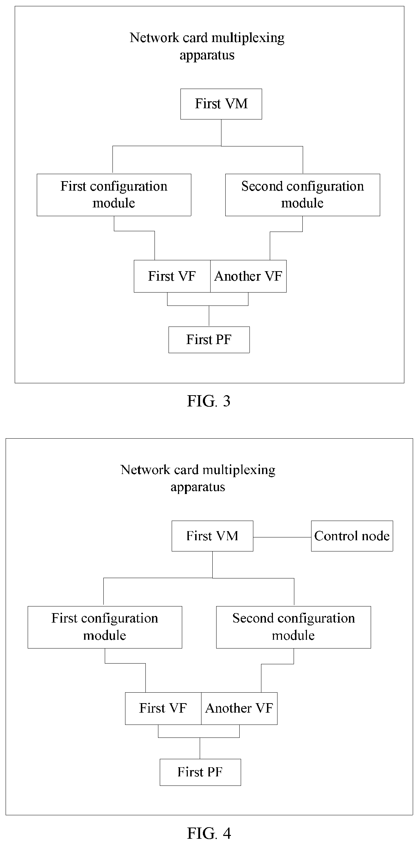

As shown in FIG. 3, the embodiments of the present disclosure provide a physical function multiplexing apparatus applied to a network device, wherein the network device includes at least one virtual machine VM; a first VM in the at least one VM has at least one physical function PF; the first VM is any VM in the at least one VM; a first PF in the at least one PF is configured with at least two virtual functions VFs; and the first PF is any PF in the at least one PF. The apparatus includes a first configuration module and a second configuration module. The first configuration module is configured to configure at least one first VF in the at least two VFs to support an OVDK function, the first VF is any VF in the at least two VFs. The second configuration module is configured to configure other VF excluding the at least one first VF in the at least two VFs to support an SR-IOV function.

In one embodiment, the first configuration module is specifically configured to: configure the at least one first VF to load a DPDK driver.

In one embodiment, the first configuration module is further configured to: generate first virtual network card resource information provided by the at least one first VF, and send the first virtual network card resource information to a control node. The second configuration module is further configured to: generate second virtual network card resource information corresponding to the other VF excluding the at least one first VF in the at least two VFs, and send the second virtual network card resource information provided by any VF in the other VF to the control node.

In one embodiment, as shown in FIG. 4, the apparatus further includes the control node configured to receive the virtual network card resource allocation request and generate a deployment command according to the first virtual network card resource information and/or the second virtual network card resource information; and a first configuration module and/or a second configuration module configured to allocate a network element according to the deployment command.

In one embodiment, the first configuration module is specifically configured to: allocate the at least one first VF to the network element for use; and the second configuration module is specifically configured to: allocate any VF in the other VF to the network element for use.

The apparatus embodiments of the present disclosure are implemented with reference to the above-mentioned method embodiments of the present disclosure.

In this way, one physical function PF is configured with a plurality of virtual functions VFs, at least one VF is configured to support the OVDK function, and all the other VFs are configured to support the SR-IOV function, so that the physical function PF can support the OVDK technology and the SR-IOV technology at the same time, thus enabling an operator to improve an ability of deploying the network element required by hybrid network performances under the condition of using the least PF, reducing a hardware requirement for deploying the network element with both high forwarding performance and multiple virtual network cards, improving a flexibility of a using environment by the operator, and reducing a cost of the network device.

In the above embodiments of the present disclosure, the first configuration module and the second configuration module in the physical function multiplexing apparatus may be realized by a CPU, a DSP, an MCU or an FPGA in practical application. The control node may be implemented by the physical server

It should be noted that: when the physical function multiplexing apparatus provided in the above embodiment performs physical function multiplexing, only the division of the above-mentioned program modules is exemplified. In practical application, the above-mentioned processing allocation may be completed by different program modules as required, that is, an internal structure of the apparatus is divided into different program modules to complete all or part of the above-described processing. In addition, the physical function multiplexing apparatus provided in the above embodiments belongs to the same concept as the embodiments of the physical function multiplexing method, and the specific implementation process is detailed in the method embodiments, and will not be elaborated here.

### First specific example

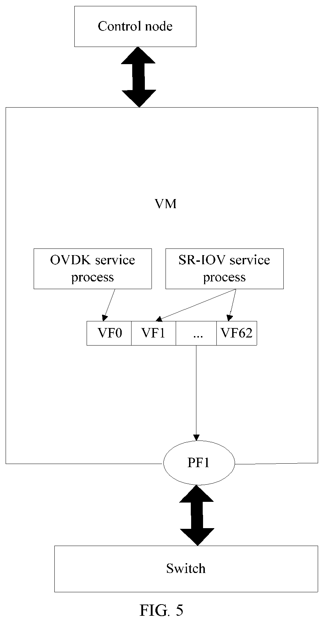

Embodiments of the present disclosure further provide a physical function multiplexing method, which is applied at a virtual machine. The virtual machine is loaded with an OVDK service process and an SR-IOV service process. As shown in FIG. 5, a network card multiplexing apparatus applied in the present disclosure is as follows: a virtual machine VM is created on a server, the virtual machine VM has a physical function PF1, and 63 virtual functions VFs are generated; the server is loaded with the OVDK service process and the SR-IOV service process, the OVDK service process is associated with VF0 and the SR-IOV service process is associated with VF1 to VF62, and PF1 is linked to a switch.

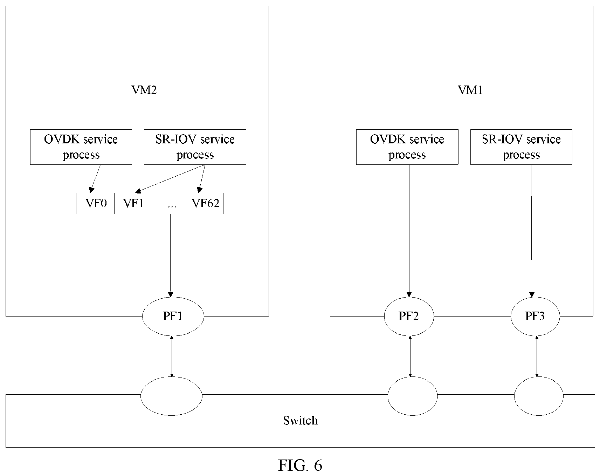

As shown in FIG. 6, a first server is created with VM1, the first server is loaded with the OVDK service process and the SR-IOV service process, the OVDK service process is associated with PF2 and linked to a virtual switch; the SR-IOV service process is associated with PF3, and both PF2 and PF3 are linked to the switch. A second server is created with VM2, PF1 is on VM2, and VF0 to VF62 are generated; the second server is loaded with the OVDK service process and the SR-IOV service process, the OVDK service process is associated with VF0, the SR-IOV service process is associated with VF1 to VF62, and PF1 is linked to the switch.

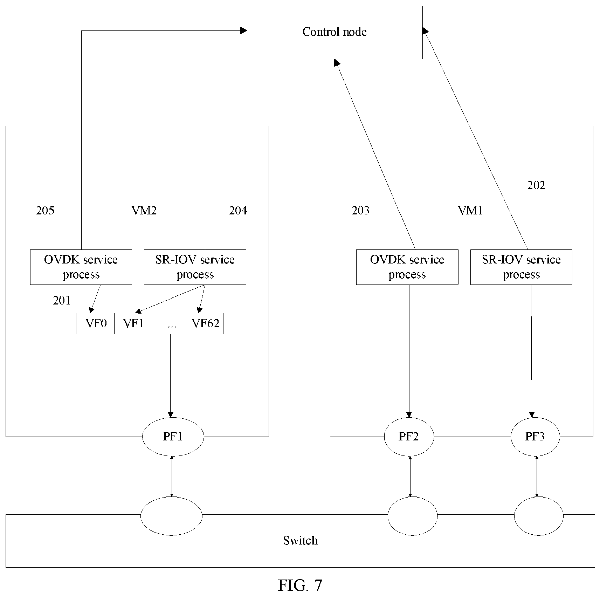

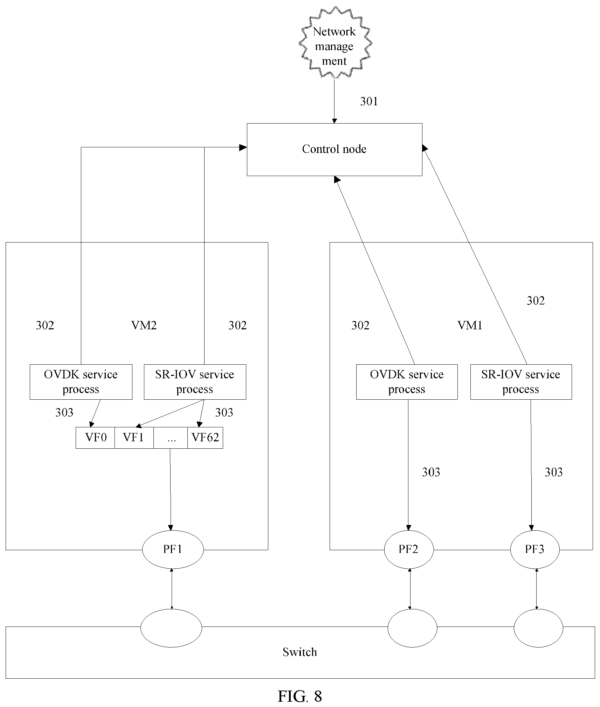

In some embodiments of the present disclosure, control flows during performing physical function multiplexing are shown in FIGs. 7 and 8, respectively, and the steps are as follows.

In S201: a computing node on VM2 controls the OVDK service process to load a DPDK driver for VF0 and link the DPDK driver to the virtual switch.

In S202: a computing node on VM1 controls the SR-IOV service process to report virtualized network resources thereof to a control node, wherein the virtualized network resources refer to all network resources of PF3, and the control node saves the virtualized network resources to a resource pool.

In S203: the computing node on VM1 controls the OVDK service process to report virtualized network resources thereof to the control node, wherein the virtualized network resources refer to all network resources of PF2, and PF2 may provide a virtual network card service based on the OVDK technology on the first server.

In S204: the computing node on VM2 controls the SR-IOV service process to report virtualized network resources thereof to the control node, wherein the virtualized network resources refer to virtual functions VF1 to VF62 of PF1, and the control node saves the virtualized network resources to the resource pool.

In S205: the computing node on VM2 controls the OVDK service process to report virtualized network resources thereof to the control node, wherein the virtualized network resources refer to VF0, and VF0 may provide a virtual network card service based on the OVDK technology on VM2.

In S301: the user sends a management command to deploy VM1 and VM2 through the control node, wherein both VM1 and VM2 need to use two virtual network interfaces, and types of the virtual network interfaces include a high-performance forwarding SRIOV-direct type and a non-SRIOV common virtual switch tap type, that is, both VM1 and VM2 need to use two different virtual network card services.

In S302: the control node queries that both VM1 and VM2 are capable to provide the above two virtual network card services at the same time.

In S303: the control node initiates a deployment control command to VM1 and VM2, and notifies the SR-IOV service process and the OVDK service process to allocate the network resources. On VM1, the computing node controls the SR-IOV service process and the OVDK service process to call PF2 and PF3 respectively for data exchange according to the control command. On VM2, the computing node controls the SR-IOV service process to call VF1 to VF62 for data exchange according to the control command, and the computing node controls the OVDK service process to call VF0 for data exchange.

In S304: VM1 and VM2 are deployed, and data transmission and intercommunication are successful. VM1 calls PF2 and PF3 for data transmission, and VM2 uses PF1 for data transmission.

### Second specific example

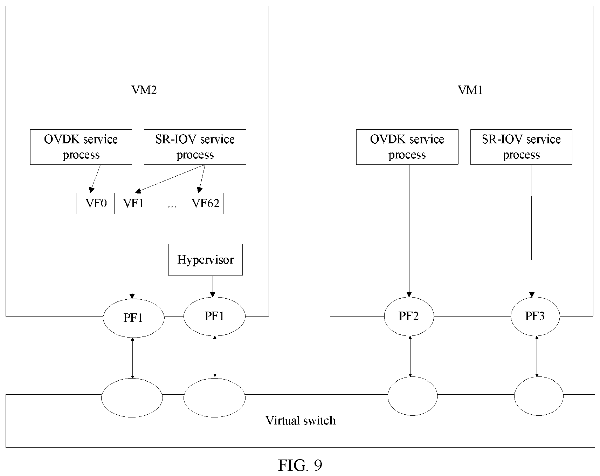

Embodiments of the present disclosure further disclose a physical function multiplexing apparatus, as shown in FIG. 9. In addition to those described in the first specific example above, the physical function multiplexing apparatus further includes PF4 on the second server, which provides a storage service through Hypervisor and is linked to the virtual switch. The Hypervisor is a middleware layer running between a basic physical server and the operating system, and may access all physical devices including disks and memories on the server. The control of the physical function multiplexing according to the embodiments of the present disclosure is as described in the first specific example above.

In this way, one PF is configured with a plurality of virtual functions VFs, one VF is configured to support the OVDK function, and all the other VFs are configured to support the SR-IOV function, so that the physical function PF can support the OVDK technology and the SR-IOV technology at the same time, thus enabling an operator to improve an ability to deploy the network element required by hybrid network performances under the condition of using the least PF, reducing a hardware requirement for deploying the network element with both high forwarding performance and multiple virtual network cards, improving a flexibility of a using environment for the operator, and reducing a cost of the network device.

Embodiments of the present disclosure further provide a computer readable storage medium storing an executable program thereon, wherein the executable program is executable by a processor to implement any of the physical function multiplexing methods mentioned above.

The embodiments of the present disclosure further provide a physical function multiplexing apparatus, which includes: a processor and a memory configured to store a computer program operable on the processor, wherein the processor is configured to execute any of the physical function multiplexing methods mentioned above when running the computer program.

It is to be understood that the memory may be implemented by any type of volatile or non-volatile memory devices, or a combination thereof. The non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a Flash Memory, a magnetic surface memory, an optical disc, or a Compact Disc Read-Only Memory (CD-ROM). The magnetic surface memory may be a magnetic disc memory or a magnetic tape memory. The volatile memory may be a Random Access Memory (RAM) that acts as an external high speed cache. By way of exemplary rather not restrictive illustration, a variety of forms of RAMs are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memor), an SyncLink Dynamic Random Access Memory (SLDRAM), and a Direct Rambus Random Access Memory (DRRAM). The memories described in the embodiments of the present disclosure are intended to include, but are not limited to, these and any other suitable types of memories.

The method disclosed in the above embodiments of the present disclosure may be applied to a processor or implemented by the processor. The processor may be an integrated circuit chip with a signal processing capacity. In an implementation process, the steps in the foregoing methods may be completed using an integrated logic circuit of hardware in the processor or an instruction in a form of software. The above-mentioned processor may be a general-purpose processor, a DSP, or other programmable logic device, a discrete gate or a transistor logic device, a discrete hardware component, or the like. The methods, steps, and logic diagrams disclosed in the embodiments of the present disclosure may be implemented or executed by the processor. The general-purpose processor may be a microprocessor or any conventional processor, and the like. Steps of the methods disclosed with reference to the embodiments of the present disclosure may be directly executed and accomplished by means of a hardware decoding processor or may be executed and accomplished using a combination of hardware and software modules in the decoding processor. The software module may be located in a storage medium. The storage medium is located in a memory. The processor reads information in the memory and completes the steps of the foregoing methods in combination with the hardware of the processor.

In the embodiments, the apparatus may be implemented by one or more Application Specific Integrated Circuits (ASICs), DSPs, Programmable Logic Devices (PLDs), Complex Programmable Logic Devices (CPLDs), FPGAs, general-purpose processors, controllers, MCUs, Microprocessors, or other electronic components for executing the aforementioned method.

In the several embodiments provided in the present application, it should be understood that the disclosed device and method may be implemented in other manners. The device embodiments above are schematic only, for example, the division of units is only a logical function division, and there may be other division modes in actual implementation, for example: a plurality of units or components may be combined, or may be integrated into another system, or some features may be omitted or not executed. In addition, the shown or discussed mutual coupling or direct coupling or communication connection may be through some interfaces. The indirect coupling or communication connection between the devices or units may be electrical, mechanical or other forms.

The above-mentioned units illustrated as separated parts may be or may not be separated physically, and the parts illustrated as units may be or may not be physical units. That is, the parts may be located at one place or distributed in multiple network units. Some or all of the units may be selected according to actual needs to achieve the objectives of the solutions in the embodiments.

In addition, each functional unit in each embodiment of the present disclosure may be integrated in one processing unit, or each unit may exist alone physically, or two or more units may be integrated in one unit. The integrated units above may be implemented in the form of hardware, or in the form of hardware and software functional units.

Those having ordinary skills in the art should understand that all or a part of the steps of implementing the foregoing embodiments may be implemented by instructing relevant hardware through a program. The program may be stored in a computer-readable storage medium, and when being executed, the steps of the above-mentioned method embodiments are included. The foregoing storage medium includes: any medium that is capable of storing program codes, such as a mobile storage device, a ROM, a RAM, a magnetic disk or an optical disc, etc.

Alternately, the above integrated units according to the present disclosure may also be stored in a computer-readable storage medium if being implemented in the form of a software function module and sold or used as an independent product. Based on such understanding, the essence of the technical solutions of the embodiments of the present disclosure, or the part contributing to the prior art, may be embodied in the form of a software product which is stored in a storage medium including a number of instructions such that a computer device (which may be a personal computer, a server, or a network device, etc.) performs all or part of the method described in each of the embodiments of the present disclosure. The foregoing storage medium includes: any medium that is capable of storing program codes, such as a mobile storage device, a ROM, a RAM, a magnetic disk or an optical disc, etc.

The foregoing descriptions are merely detailed embodiments of the present disclosure, but the protection scope of the present disclosure is not limited thereto. Any person skilled in the art can easily think of changes or substitutions within the technical scope of the present disclosure, and all the changes or substitutions should be covered by the protection scope of the present disclosure. Therefore, the protection scope of the present disclosure should be subjected to the protection scope of the claims.

## Claims

1. A physical function multiplexing method, **characterized in that**, the method is applied at a network device, and the network device comprises at least one virtual machine VM; a first VM in the at least one VM has at least one physical function PF; the first VM is any VM in the at least one VM; a first PF in the at least one PF is configured with at least two virtual functions VFs, and the first PF is any PF in the at least one PF; wherein the method comprises:
configuring (110) at least one first VF in the at least two VFs to support an OpenVswitch standard and a Data Plane Development Kit, OVDK, function, the first VF being any VF in the at least two VFs; and
configuring (120) other VF excluding the at least one first VF in the at least two VFs to support a single root I/O virtualization SR-IOV function.

2. The method according to claim 1, further comprising:
generating (130) first virtual network card resource information corresponding to the at least one first VF;
sending the first virtual network card resource information to a control node;
generating (140) second virtual network card resource information corresponding to the other VF excluding the at least one first VF in the at least two VFs; and
sending the second virtual network card resource information provided by any VF in the other VF to the control node.

3. The method according to claim 2, further comprising:
receiving (150), by the control node, a virtual network card resource allocation request and generating a deployment command according to the first virtual network card resource information and/or the second virtual network card resource information; and
allocating (160) network card resource according to the deployment command.

4. The method according to claim 3, wherein the allocating network card resource according to the deployment command, comprises:
allocating the at least one first VF and any VF in the other VF to a network element corresponding to the virtual network card resource allocation request.

5. The method according to claim 1, wherein the configuring (110) at least one first VF in the at least two VFs to support the OVDK function, comprises:
configuring the at least one first VF to load a DPDK driver.

6. A physical function multiplexing apparatus, **characterized in that**, the apparatus is applied to a network device, and the network device comprises at least one virtual machine VM; a first VM in the at least one VM has at least one physical function PF; the first VM is any VM in the at least one VM; a first PF in the at least one PF is configured with at least two virtual functions VFs, and the first PF is any PF in the at least one PF; wherein the apparatus comprises:
a first configuration module configured to configure at least one first VF in the at least two VFs to support an OpenVswitch standard and a Data Plane Development Kit, OVDK, function, the first VF being any VF in the at least two VFs; and
a second configuration module configured to configure other VF excluding the at least one first VF in the at least two VFs to support a single root I/O virtualization SR-IOV function.

7. The apparatus according to claim 6, wherein,
the first configuration module is further configured to: generate first virtual network card resource information provided by the at least one first VF, and send the first virtual network card resource information to a control node; and
the second configuration module is further configured to: generate second virtual network card resource information corresponding to the other VF excluding the at least one first VF in the at least two VFs; and send the second virtual network card resource information provided by any VF in the other VF to the control node.

8. The apparatus according to claim 7, further comprising:
the control node, configured to receive a virtual network card resource allocation request and generate a deployment command according to the first virtual network card resource information and/or the second virtual network card resource information; wherein,
the first configuration module and/or the second configuration module is configured to allocate network card resource according to the deployment command.

9. The apparatus according to claim 8, wherein,
the first configuration module is configured to: allocate the at least one first VF to a network element corresponding to the virtual network card resource allocation request; and
the second configuration module is configured to: allocate any VF in the other VF to the network element corresponding to the virtual network card resource allocation request.

10. The apparatus according to claim 6, wherein the first configuration module is configured to: configure the at least one first VF to load a DPDK driver.

11. A computer readable medium storing a computer program thereon, wherein the computer program, when executed by a processor, executes the method according to any one of claims 1 to 5.

## Patentansprüche

1. Physikalisches Funktionsmultiplexverfahren, **dadurch gekennzeichnet, dass** das Verfahren auf ein Netzwerkgerät angewendet wird und das Netzwerkgerät mindestens eine virtuelle Maschine VM umfasst; eine erste VM in der mindestens einen VM mindestens eine physikalische Funktion PF hat; die erste VM eine beliebige VM in der mindestens einen VM ist; eine erste PF in der mindestens einen PF mit mindestens zwei virtuellen Funktionen VFs konfiguriert ist und die erste PF eine beliebige PF in der mindestens einen PF ist; wobei das Verfahren umfasst:
Konfigurieren (110) mindestens einer ersten VF in den mindestens zwei VFs, um einen OpenVswitch-Standard und eine Data Plane Development Kit, OVDK, Funktion zu unterstützen, wobei die erste VF eine beliebige VF in den mindestens zwei VFs ist; und
Konfigurieren (120) anderer VF mit Ausnahme der mindestens einen ersten VF in den mindestens zwei VFs, um eine Single-Root-I/O-Virtualisierung, SR-IOV, zu unterstützen.

2. Das Verfahren nach Anspruch 1 umfasst ferner:
Erzeugen (130) von ersten virtuellen Netzwerkkarten-Ressourceninformationen, die der mindestens einen ersten VF entsprechen;
Senden der ersten virtuellen Netzwerkkarten-Ressourceninformationen an einen Kontrollknoten;
Erzeugen (140) einer zweiten virtuellen Netzwerkkarten-Ressourceninformation, die der anderen VF mit Ausnahme der mindestens einen ersten VF in den mindestens zwei VFs entspricht; und
Senden der zweiten virtuellen Netzwerkkarten-Ressourceninformation, die von einer beliebigen VF in der anderen VF bereitgestellt werden, an den Kontrollknoten.

3. Das Verfahren nach Anspruch 2 umfasst ferner:
Empfangen (150) einer Anfrage für die Zuweisung von virtuellen Netzwerkkarten-Ressourcen durch den Kontrollknoten und Erzeugen eines Bereitstellungsbefehls gemäß der ersten virtuellen Netzwerkkarten-Ressourceninformation und/oder der zweiten virtuellen Netzwerkkarten-Ressourceninformation; und
Zuweisung (160) von Netzwerkkarten-Ressourcen entsprechend dem Zuweisungsbefehl.

4. Verfahren nach Anspruch 3, wobei die Zuweisung von Netzwerkkarten-Ressourcen gemäß dem Bereitstellungsbefehl umfasst:
Zuweisung der mindestens einen ersten VF und jeder VF in der anderen VF an ein Netzelement, entsprechend der Anfrage für die Zuweisung von virtuellen Netzwerkkarten-Ressourcen.

5. Verfahren nach Anspruch 1, wobei das Konfigurieren (110) mindestens einer ersten VF in den mindestens zwei VFs, um die OVDK-Funktion zu unterstützen, umfasst:
Konfigurieren des mindestens einen ersten VF zum Laden eines DPDK-Treibers.

6. Physikalische Funktionsmultiplexvorrichtung, **dadurch gekennzeichnet, dass** die Vorrichtung auf ein Netzwerkgerät angewendet wird und das Netzwerkgerät mindestens eine virtuelle Maschine VM umfasst; eine erste VM in der mindestens einen VM mindestens eine physikalische Funktion PF aufweist; die erste VM eine beliebige VM in der mindestens einen VM ist; eine erste PF in der mindestens einen PF mit mindestens zwei virtuellen Funktionen VF konfiguriert ist und die erste PF eine beliebige PF in der mindestens einen PF ist; wobei die Vorrichtung umfasst:
ein erstes Konfigurationsmodul, das so konfiguriert ist, dass es mindestens eine erste VF in den mindestens zwei VFs so konfiguriert, dass sie einen OpenVswitch-Standard und eine Funktion des Data Plane Development Kit, OVDK, unterstützt, wobei die erste VF eine beliebige VF in den mindestens zwei VFs ist; und
ein zweites Konfigurationsmodul, das so konfiguriert ist, dass es andere VFs mit Ausnahme der mindestens einen ersten VF in den mindestens zwei VFs so konfiguriert, dass sie eine Single-Root-I/O-Virtualisierung, SR-IOV, unterstützen.

7. Die Vorrichtung nach Anspruch 6, wobei,
das erste Konfigurationsmodul ferner konfiguriert ist, um: erste virtuelle Netzwerkkarten-Ressourceninformationen zu erzeugen, die von dem mindestens einen ersten VF bereitgestellt werden, und die ersten virtuellen Netzwerkkarten-Ressourceninformationen an einen Kontrollknoten zu senden; und
das zweite Konfigurationsmodul ferner konfiguriert ist, um: zweite virtuelle Netzwerkkarten-Ressourceninformationen zu erzeugen, die der anderen VF mit Ausnahme der mindestens einen ersten VF in den mindestens zwei VFs entsprechen; und die zweiten virtuellen Netzwerkkarten-Ressourceninformationen, die von jeder VF in der anderen VF bereitgestellt werden, an den Kontrollknoten zu senden.

8. Vorrichtung nach Anspruch 7, ferner umfassend:
den Kontrollknoten, der so konfiguriert ist, dass er eine Anfrage für die Zuweisung von virtuellen Netzwerkkarten-Ressourcen empfängt und einen Bereitstellungsbefehl entsprechend der ersten virtuellen Netzwerkkarten-Ressourceninformation und/oder der zweiten virtuellen Netzwerkkarten-Ressourceninformation erzeugt; wobei,
das erste Konfigurationsmodul und/oder das zweite Konfigurationsmodul so konfiguriert ist, dass es Netzwerkkarten-Ressourcen entsprechend dem Bereitstellungsbefehl zuweist.

9. Die Vorrichtung nach Anspruch 8, wobei,
das erste Konfigurationsmodul ist so konfiguriert, dass es: die mindestens eine erste VF einem Netzelement zuweist, entsprechend der Anfrage für die Zuweisung von virtuellen Netzwerkkarten-Ressourcen; und
das zweite Konfigurationsmodul ist so konfiguriert, dass es: dem Netzelement eine beliebige VF in der anderen VF zuweist, entsprechend der Anfrage für die Zuweisung von virtuellen Netzwerkkarten-Ressourcen.

10. Vorrichtung nach Anspruch 6, wobei das erste Konfigurationsmodul so konfiguriert ist, dass es: die mindestens eine erste VF so konfiguriert, dass sie einen DPDK-Treiber lädt.

11. Ein computerlesbares Speichermedium, auf dem ein Computerprogramm gespeichert ist, wobei das Computerprogramm, wenn es von einem Prozessor ausgeführt wird, das Verfahren nach einem der Ansprüche 1 bis 5 ausführt.

## Revendications

1. Procédé de multiplexage de fonction physique, **caractérisé en ce que** le procédé est appliqué au niveau d'un dispositif de réseau, et le dispositif de réseau comprend au moins une machine virtuelle VM ; une première VM dans ladite au moins une VM a au moins une fonction physique PF ; la première VM est une VM quelconque dans ladite au moins une VM ; une première PF dans ladite au moins une PF est configurée avec au moins deux fonctions virtuelles VF, et la première PF est une PF quelconque dans ladite au moins une PF ; dans lequel le procédé comprend les étapes consistant à :
configurer (110) au moins une première VF dans lesdites au moins deux VF pour supporter une fonction OVDK de standard OpenVswitch et de kit de développement de plan de données (Data Plan Development Kit), la première VF étant une VF quelconque dans lesdites au moins deux VF ; et
configurer (120) une autre VF à l'exception de ladite au moins une première VF dans lesdites au moins deux VF pour supporter une fonction SR-IOV (Single-Root I/O Virtualization) de virtualisation E/S à racine unique.

2. Procédé selon la revendication 1, comprenant en outre les étapes consistant à :
générer (130) des premières informations de ressources de carte réseau virtuelle correspondant à ladite au moins une première VF ;
envoyer les premières informations de ressources de carte réseau virtuelle à un noeud de commande ;
générer (140) des secondes informations de ressources de carte réseau virtuelle correspondant à l'autre VF à l'exception de ladite au moins une première VF dans lesdites au moins deux VF ; et
envoyer les secondes informations de ressources de carte réseau virtuelle fournies par une VF quelconque dans l'autre VF au noeud de commande.

3. Procédé selon la revendication 2, comprenant en outre les étapes consistant à :
recevoir (150), via le noeud de commande, une requête d'allocation de ressources de carte réseau virtuelle et générer un ordre de déploiement en accord avec les premières informations de ressources de carte réseau virtuelle et/ou les secondes informations de ressources de carte réseau virtuelle ; et
allouer (160) des ressources de carte réseau en accord avec l'ordre de déploiement.

4. Procédé selon la revendication 3, dans lequel l'étape consistant à allouer des ressources de carte réseau en accord avec l'ordre de déploiement comprend :
d'allouer ladite au moins une première VF et une VF quelconque dans l'autre VF à un élément de réseau en correspondance avec la requête d'allocation de ressources de carte réseau virtuelle.

5. Procédé selon la revendication 1, dans lequel l'étape consistant à configurer (110) au moins une première VF dans lesdites au moins deux VF pour supporter la fonction OVDK comprend :
de configurer ladite au moins une première VF pour charger un pilote DPDK.

6. Appareil de multiplexage de fonction physique, **caractérisé en ce que** l'appareil est appliqué à un dispositif de réseau, et le dispositif de réseau comprend au moins une machine virtuelle VM ; une première VM dans ladite au moins une VM a au moins une fonction physique PF ; la première VM est une VM quelconque dans ladite au moins une VM ; une première PF dans ladite au moins une PF est configurée avec au moins deux fonctions virtuelles VF, et la première PF est une PF quelconque dans ladite au moins une PF ; dans lequel l'appareil comprend :
un premier module de configuration configuré pour configurer au moins une première VF dans lesdites au moins deux VF pour supporter une fonction OVDK de standard OpenVswitch et de kit de développement de plan de données (Data Plan Development Kit), la première VF étant une VF quelconque dans lesdites au moins deux VF ; et
un second module de configuration configuré pour configurer une autre VF à l'exception de ladite au moins une première VF dans lesdites au moins deux VF pour supporter une fonction SR-IOV (Single-Root I/O Virtualization) de virtualisation E/S à racine unique.

7. Appareil selon la revendication 6, dans lequel
le premier module de configuration est en outre configuré pour : générer des premières informations de ressources de carte réseau virtuelle fournies par ladite au moins une première VF, et envoyer les premières informations de ressources de carte réseau virtuelle à un noeud de commande ; et
le second module de configuration est en outre configuré pour : générer des secondes informations de ressources de carte réseau virtuelle correspondant à l'autre VF à l'exception de ladite au moins une première VF dans lesdites au moins deux VF ; et envoyer les secondes informations de ressources de carte réseau virtuelle fournies par une VF quelconque dans l'autre VF au noeud de commande.

8. Appareil selon la revendication 7, comprenant en outre :
le noeud de commande, configuré pour recevoir une requête d'allocation de ressources de carte réseau virtuelle et pour générer un ordre de déploiement en accord avec les premières informations de ressources de carte réseau virtuelle et/ou les secondes informations de ressources de carte réseau virtuelle ; dans lequel
le premier module de configuration et/ou le second module de configuration est/sont configuré(s) pour allouer des ressources de carte réseau en accord avec l'ordre de déploiement.

9. Appareil selon la revendication 8, dans lequel
le premier module de configuration est configuré pour : allouer ladite au moins une première VF à un élément de réseau en correspondance avec la requête d'allocation de ressources de carte réseau virtuelle ; et
le second module de configuration est configuré pour : allouer une VF quelconque dans l'autre VF à l'élément de réseau en correspondance avec la requête d'allocation de ressources de carte réseau virtuelle.

10. Appareil selon la revendication 6, dans lequel le premier module de configuration est configuré pour : configurer ladite au moins une première VF pour charger un pilote DPDK.

11. Support lisible sur ordinateur stockant programme d'ordinateur sur celui-ci, dans lequel le programme d'ordinateur, quand il est exécuté par un processeur, exécuter le procédé selon l'une quelconque des revendications 1 à 5.
